# EUROPEAN PATENT APPLICATION

(11) **EP 3 686 485 A1**
(43) Date of publication of application: **29.07.2020**
(21) Application number: 19216771.6
(22) Date of filing: 17.12.2019
(51) Int. Cl.: F21V 8/00, G02F 1/1335, G02F 1/13357

(54) **BACKLIGHT UNIT AND A LIQUID CRYSTAL DISPLAY DEVICE INCLUDING THE SAME**

(30) Priority: 22.01.2019 KR 20190008046
(71) Applicant: Samsung Display Co., Ltd., Gyeonggi-do 17113 (KR)
(72) Inventor: Lim, Ho, 3101-1503 Suwon-si Gyeonggi-do (KR); Kim, Kaeun, 5813-202 Seongnam-si, Gyeonggi-do (KR); Kim, Taemin, 202 Hwaseong-si, Gyeonggi-do (KR); Suh, Duckjong, 107-2402 Gyeonggi-do (KR); Seo, Bongsung, 2301-1103 Suwon-si, Gyeonggi-do (KR); Lee, Seulgee, 134-1003 Seoul (KR)
(74) Representative: Dr. Weitzel & Partner

(57) **Abstract**

A backlight unit includes: a light guiding member including an incident surface on which light is incident and an exit surface from which the light is emitted; a light source adjacent to the incident surface of the light guiding member and configured to generate the light; a low refraction layer disposed on the exit surface of the light guiding member; a color conversion layer disposed on the low refraction layer; and an optical layer disposed on the color conversion layer, wherein the optical layer has a pencil hardness of 4 H or greater.

## Description

### Technical Field

The present inventive concept relates to a backlight unit, a liquid crystal display device including the same and a method of manufacturing the backlight unit.

### Discussion of Related Art

Various types of electronic display devices are used to present information in visual form. A liquid crystal display device is one example of these display devices. The liquid crystal display device uses the modulating properties of liquid crystals in conjunction with a backlight to produce images. Liquid crystal displays are used in a wide variety of applications such as, televisions, smartphones, and the like. To increase the light efficiency and color reproducibility of a liquid crystal display device, various kinds of optical members are added to a backlight unit.

However, due to scratches and the like generated during a process, external moisture and oxygen may penetrate into the backlight unit, thereby lowering the display quality of the liquid crystal display device.

### SUMMARY

An exemplary embodiment of the inventive concept provides a backlight unit including a light guiding member having an incident surface on which light is incident and an exit surface from which the light is emitted, a light source adjacent to the incident surface of the light guiding member and configured to generate the light, a low refraction layer disposed on the exit surface of the light guiding member, a color conversion layer disposed on the low refraction layer, and an optical layer disposed on the color conversion layer, wherein the optical layer has a pencil hardness of 4 H or greater. A corresponding pencil hardness test (also referred to as Wolff-Wilborn test) defines a "pencil hardness" of a coating as the grade of the hardest pencil that does not permanently mark the coating when pressed firmly, for example with a load of 1 kg, against it at a 45 degree angle.

In an exemplary embodiment of the inventive concept, the optical layer includes a plurality of optical pattern portions, at least one of the plurality of optical pattern portions may have a convex lens shape protruding in a direction away from the exit surface, and may have an aspect ratio of 0.5 to 1.5.

In an exemplary embodiment of the inventive concept, an average diameter of the plurality of optical pattern portions may be 100 nm to 20 µm.

In an exemplary embodiment of the inventive concept, the plurality of optical pattern portions may be spaced apart from each other, and the optical layer may include a spacing plane between the optical pattern portions.

In an exemplary embodiment of the inventive concept, the optical layer may include a polyfunctional polymerizable resin.

In an exemplary embodiment of the inventive concept, the optical layer may further include a silica particle.

In an exemplary embodiment of the inventive concept, the optical layer may be disposed in an outermost region of the backlight unit.

In an exemplary embodiment of the inventive concept, the color conversion layer may include a quantum dot.

In an exemplary embodiment of the inventive concept, the color conversion layer may further include a base resin and scattering particles dispersed in the base resin.

In an exemplary embodiment of the inventive concept, a refractive index of the low refraction layer may be 1.2 to 1.4.

In an exemplary embodiment of the inventive concept, the low refraction layer may be disposed directly on the light guiding member.

In an exemplary embodiment of the inventive concept, the backlight unit may further include a barrier layer disposed adjacent to at least a surface of the color conversion layer.

In an exemplary embodiment of the inventive concept, the barrier layer may include at least one inorganic film.

In an exemplary embodiment of the inventive concept, the backlight unit may further include a first barrier layer disposed between the color conversion layer and the low refraction layer and a second barrier layer disposed between the color conversion layer and the optical layer.

In an exemplary embodiment of the inventive concept, the light guiding member may include a light guiding pattern.

In an exemplary embodiment of the inventive concept, a liquid crystal display device includes a liquid crystal display panel configured to be provided with light to display an image, and a backlight unit configured to provide the light, wherein the backlight unit includes a light source configured to generate the light, a light guiding member configured to guide the light generated from the light source, a color conversion layer disposed on the light guiding member and including a quantum dot, and an optical layer disposed on the color conversion layer and including a plurality of optical pattern portions spaced apart from each other.

In an exemplary embodiment of the inventive concept, the optical layer may further include a spacing plane between the plurality of optical pattern portions, and may have a pencil hardness of 4 H or greater.

In an exemplary embodiment of the inventive concept, at least one of the plurality of optical pattern portions may have a convex lens shape protruding in a direction towards the liquid crystal display panel, and may have an aspect ratio of 0.5 to 1.5.

In an exemplary embodiment of the inventive concept, a method for manufacturing a backlight unit includes forming a low refraction layer on a light guiding member, forming a color conversion layer on the low refraction layer, and forming an optical layer on the color conversion layer.

In an exemplary embodiment of the inventive concept, the forming of the optical layer may include preparing an electric spray material including a polyfunctional polymerizable resin, spraying the electric spray material through a nozzle while a voltage is applied, laminating the electric spray material on the color conversion layer, and curing the laminated electric spray material.

In an exemplary embodiment of the inventive concept, the electric spray material may further include a silica particle, and may have a viscosity of 20 cP (Centipoise) or less (0,02 Pa s (Pascal-second) or less) .

In an exemplary embodiment of the inventive concept, the electric spray material may be sprayed in a droplet state.

In an exemplary embodiment of the inventive concept, the forming of the color conversion layer may include preparing a base resin in which quantum dots are dispersed, and coating the base resin on the low refraction layer.

In an exemplary embodiment of the inventive concept, a backlight unit includes: a light guiding member configured to receive light from a light source at a first side and emit the light from a second side; a refraction layer disposed on the second side of the light guiding member; a color conversion layer disposed on the refraction layer; and an optical layer disposed on the color conversion layer, wherein the light guiding member, the refraction layer, the color conversion layer and the optical layer are arranged in sequence and wherein the optical layer has a pencil hardness of 4H or more.

In an exemplary embodiment of the inventive concept, the refraction layer directly contacts the light guiding member and the color conversion layer.

### BRIEF DESCRIPTION OF THE FIGURES

Exemplary embodiments of the inventive concept will be more clearly understood from the following detailed description taken in conjunction with the accompanying drawings. In the drawings:
FIG. 1 is an exploded perspective view of a liquid crystal display device according to an exemplary embodiment of the inventive concept;
FIG. 2 is a cross-sectional view of a backlight unit according to an exemplary embodiment of the inventive concept in a portion corresponding to I-I' in the liquid crystal display device shown in FIG. 1;
FIG. 3 is a cross-sectional view showing a portion of a color conversion layer included in a backlight unit according to an exemplary embodiment of the inventive concept;
FIG. 4A and FIG. 4B are views showing a path of light in an optical layer according to an exemplary embodiment of the inventive concept;
FIG. 5A and FIG. 5B are cross-sectional views showing an optical layer according to exemplary embodiments of the inventive concept;
FIG. 5C is a graph showing an increase in light efficiency according to the density of an optical pattern portion according to an exemplary embodiment of the inventive concept;
FIG. 5D is an image of a plane of an optical layer according to an exemplary embodiment of the inventive concept;
FIG. 6A and FIG. 6B are cross-sectional views showing a backlight unit according to an exemplary embodiment of the inventive concept;
FIG. 7 is a cross-sectional view of a portion corresponding to II-II' in the liquid crystal display device of FIG. 1;
FIG. 8 is a cross-sectional view of a liquid crystal display panel according to an exemplary embodiment of the inventive concept;
FIG. 9 is a view schematically showing a method for manufacturing a backlight unit according to an exemplary embodiment of the inventive concept; and
FIG. 10 is a view schematically showing a method for preparing an optical layer according to an exemplary embodiment of the inventive concept.

### DETAILED DESCRIPTION OF THE EMBODIMENTS

Exemplary embodiments of the inventive concept will now be described more fully with reference to the drawings. It should be understood, however, that the inventive concept may be embodied in many different forms and should not be construed as being limited to the particular embodiments disclosed herein.

Like reference numerals may refer to like elements in the drawings. The terms of a singular form may include plural forms unless the context clearly indicates otherwise.

In the present specification, if a portion such as a layer, a film, a region, or a plate is referred to as being "on" or "above" the other portion, it includes not only the case in which the portion is "directly on" the other portion, but also the case in which another portion is disposed therebetween.

In addition, in the present specification, "directly disposed" may mean that there is no layer, film, region, plate or the like added between a portion of a layer, a film, a region, a plate or the like and other portions. For example, being "directly disposed" may mean being disposed without additional members such as an adhesive member between two layers or two members.

Hereinafter, a backlight unit and a liquid crystal display device both according to an exemplary embodiment of the inventive concept will be described with reference to the accompanying drawings.

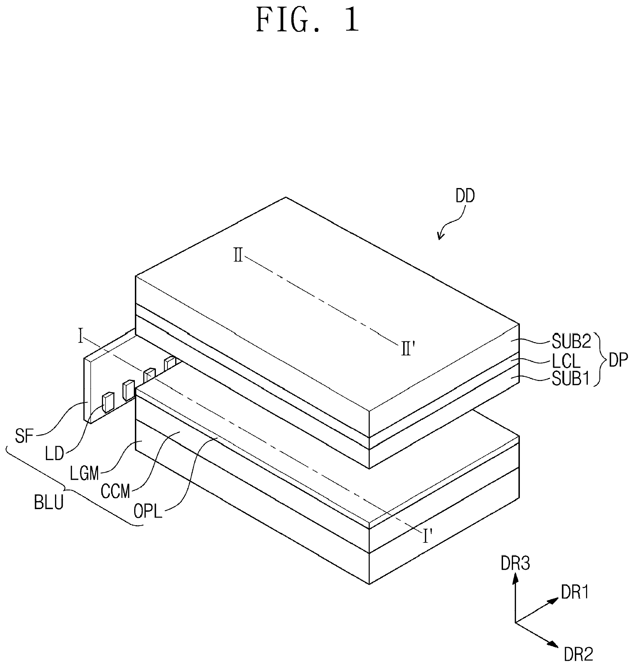

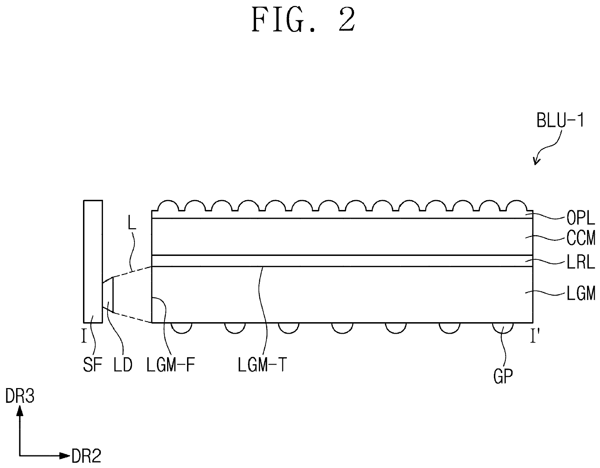

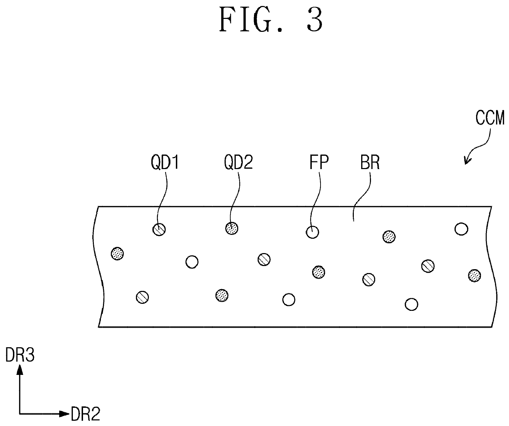

FIG. 1 is an exploded perspective view of a liquid crystal display device according to an exemplary embodiment of the inventive concept. FIG. 2 is a cross-sectional view of a backlight unit included in a liquid crystal display device according to an exemplary embodiment of the inventive concept. FIG. 3 is a cross-sectional view showing a portion of a color conversion layer included in a backlight unit according to an exemplary embodiment of the inventive concept.

In FIG. 1, a first direction axis DR1, a second direction axis DR2 and a third direction axis DR3 are illustrated. A direction axis described in the present specification may be relative. For example, in FIG. 1, the third direction axis DR3 may be a direction in which an image is provided to a user. In addition, the first direction axis DR1 and the second direction axis DR2 are perpendicular to each other, and the third direction axis DR3 may be in a normal direction with respect to a plane defined by the first direction axis DR1 and the second direction axis DR2.

Referring to FIG. 1, a liquid crystal display device DD according to an exemplary embodiment of the inventive concept may include a liquid crystal display panel DP and a backlight unit BLU. The backlight unit BLU may be disposed on at least one side of the liquid crystal display panel DP.

The liquid crystal display panel DP displays images. The liquid crystal display panel DP may include a first substrate SUB1 and a second substrate SUB2 facing each other, and a liquid crystal layer LCL disposed between the first substrate SUB1 and the second substrate SUB2.

The backlight unit BLU provides light to the liquid crystal display panel DP. The backlight unit BLU includes at least one light source LD for emitting light, a light guiding member LGM for guiding light in the direction of the liquid crystal display panel DP, a color conversion layer CCM, and an optical layer OPL. There may be a plurality of light sources LD, and the plurality of light sources LD may be disposed on a support SF.

In an exemplary embodiment of the inventive concept, the backlight unit BLU is an edge-type backlight unit. In other words, the backlight unit BLU may be configured such that the light source LD provides light L (see FIG. 2) to a side surface of the light guiding member LGM from below the liquid crystal display panel DP. In this case, the light L (see FIG. 2) may be transmitted to the liquid crystal display panel DP through the light guiding member LGM.

In an exemplary embodiment of the inventive concept, the liquid crystal display device DD may further include a housing for receiving the liquid crystal display panel DP and the backlight unit BLU. The housing may cover the backlight unit BLU and the liquid crystal display panel DP such that an upper surface of the second substrate SUB2, which is a display surface of the liquid crystal display panel DP, is exposed. In addition, the housing may cover not only a side surface and a bottom surface of the liquid crystal display panel DP but also a portion of the second substrate SUB2, which is an upper surface of the liquid crystal display panel DP.

FIG. 2 is a cross-sectional view showing a backlight unit BLU-1 in a portion corresponding to line I-I' in the liquid crystal display device DD shown in FIG. 1. FIG. 2 shows a cross-section of the backlight unit BLU-1 on a plane parallel to a plane defined by the second direction axis DR2 and the third direction axis DR3.

The backlight unit BLU-1 according to an exemplary embodiment of the inventive concept may include a light guiding member LGM including an incident surface LGM-F on which light L is incident and an exit surface LGM-T from which the light L is emitted, a light source LD adjacent to the incident surface LGM-F of the light guiding member LGM and configured to generate the light L, a low refraction layer LRL disposed on the exit surface LGM-T of the light guiding member LGM, a color conversion layer CCM disposed on the low refraction layer LRL, and an optical layer OPL disposed on the color conversion layer CCM. In FIG. 2, the light guiding member LGM, the low refraction layer LRL, the color conversion layer CCM, and the optical layer OPL may be sequentially laminated in the third direction axis DR3.

The light source LD disposed on the support SF emits the light L to one surface of the light guiding member LGM. The light L generated from the light source LD is incident on one side surface of the light guiding member LGM, in other words, the incident surface LGM-F. The light L incident from the light source LD is transmitted to one side surface of the light guiding member LGM, in other words, the exit surface LGM-T, and then, transmitted to the liquid crystal display panel DP.

The light guiding member LGM may be made of glass. However, the inventive concept is not limited thereto. The light guiding member LGM may be made of a polymer resin, and may be formed of a material including, for example, an acrylic resin or the like. The light guiding member LGM may be a substrate on which the low refraction layer LRL, the color conversion layer CCM, the optical layer OPL, and the like are disposed, which are to be described later.

The light guiding member LGM may include a light guiding pattern portion GP. The light guiding pattern portion GP may be disposed on the opposite side of the exit surface LGM-T of the light guiding member LGM in the third direction axis DR3. The light guiding pattern portion GP may transmit light emitted from the light source LD and then incident on one side surface of the light guiding member LGM to another side surface of the light guiding member LGM. The light guiding pattern portion GD may also change the direction of the light so that it is transmitted in the direction of the exit surface LGM-T of the light guiding member LGM.

In the cross-sectional view of FIG. 2, the light guiding pattern portion GP is illustrated as having a cross-section with a semicircular shape. However, the inventive concept is not limited thereto. The light guiding pattern portion GP may have a cross-section with an inclined surface. In addition, the light guiding pattern portions GP may have sizes different from each other. Further, the arrangement density of the light guiding pattern portions GP disposed on the light guiding member LGM may be adjusted differently on the light guiding member LGM according to the distance from the light source LD. For example, there may be a large number of light guiding pattern portions GP closer to the light source LD and a small number of light guiding pattern portions GP farther from the light source LD. In other words, the arrangement density of the light guiding pattern portions GP in a region closer to the light source LD may be higher than the arrangement density of the light guiding pattern portions GP in a region farther from the light source LD.

The light guiding pattern portion GP may protrude from one side surface of the light guiding member LGM to be integrally formed with the light guiding member LGM. In addition, the light guiding pattern portion GP may be a concave pattern or other pattern with portions being recessed in the third direction axis DR3 from one side surface of the light guiding member LGM.

The low refraction layer LRL may be disposed on the light guiding member LGM. The low refraction layer LRL may be disposed directly on the light guiding member LGM. The low refraction layer LRL may be formed directly on the light guiding member LGM and disposed in contact with the exit surface LGM-T of the light guiding member LGM. However, the inventive concept is not limited thereto. A barrier layer may be disposed between the light guiding member LGM and the low refraction layer LRL.

The refractive index of the low refraction layer LRL may be lower than the refractive index of the light guiding member LGM. The refractive index of the low refraction layer LRL may be lower than the refractive index of the light guiding member LGM and of the color conversion layer CCM. The refractive index of the low refraction layer LRL may be 1.2 to 1.4. For example, the refractive index of the low refraction layer LRL may be 1.2 to 1.3. The difference in refractive index between the low refraction layer LRL and the light guiding member LGM may be 0.2 or greater.

Since the low refraction layer LRL has preferably a lower refractive index than the light guiding member LGM, the light L incident from the light source LD on the light guiding member LGM may be effectively transmitted to another surface of the light guiding member LGM, which is spaced apart from the light source LD. In other words, since the low refraction layer LRL has preferably a lower refractive index of 1.2 to 1.4, for example 1.2 to 1.3, which is lower than the refractive index of the light guiding member LGM, the total reflection is effectively performed at the boundary between the light guiding member LGM and the low refraction layer LRL. In this case, the light L emitted from the light source LD may be effectively transmitted to a side surface of the light guiding member LGM, which is spaced apart from the light source LD.

The color conversion layer CCM may be disposed on the light guiding member LGM and the low refraction layer LRL. The color conversion layer CCM may include a quantum dot. The color conversion layer CCM may change the color of the light L provided from the light source LD and transmit light with changed color to the liquid crystal layer LCL of the liquid crystal display panel DP. For example, light provided from the light source LD may be provided to the liquid crystal layer LCL as white light after passing through the color conversion layer CCM.

In an exemplary embodiment of the inventive concept shown in FIG. 3, the color conversion layer CCM may include a base resin BR and quantum dots QD1 and QD2. The quantum dots QD1 and QD2 may be dispersed in the base resin BR.

The base resin BR is a medium in which the quantum dots QD1 and QD2 are dispersed, and may be formed of various resin compositions which may be referred to as a binder. However, the inventive concept is not limited thereto. For example, any medium may be the base resin BR regardless of its name, additional functions, composition materials, or the like, as long as it may disperse and dispose the quantum dots QD1 and QD2. The base resin BR may be a polymer resin. For example, the base resin BR may be an acrylic resin, a urethane-based resin, a silicone-based resin, an epoxy resin, or the like. The base resin BR may be a transparent resin.

Each of the quantum dots QD1 and QD2 may be a particle for converting the wavelength of light provided from the light source LD (see FIG. 2). Each of the quantum dots QD1 and QD2 is a material having a crystal structure of a few nanometers in size, and is composed of hundreds to thousands of atoms. Due to the small size thereof, each of the quantum dots QD1 and QD2 exhibits a quantum confinement effect in which an energy band gap is increased. When light of a wavelength having higher energy than a band gap is incident on the quantum dots QD1 and QD2, each of the quantum dots QD1 and QD2 is excited by absorbing the light and falls to a ground state by emitting light of a specific wavelength. The wavelength of the emitted light has a value corresponding to the band gap. When the size and composition of each of the quantum dots QD1 and QD2 are adjusted, light emitting properties caused by the quantum confinement effect may be controlled.

Each of the quantum dots QD1 and QD2 may be selected from a Group II-VI compound, a Group III-V compound, a Group IV-VI compound, a Group IV element, a Group IV compound, and a combination thereof.

The Group II-VI compound may be selected from the group consisting of: a binary compound selected from the group consisting of CdSe, CdTe, ZnS, ZnSe, ZnTe, ZnO, HgS, HgSe, HgTe, MgSe, MgS, and a mixture thereof; a ternary compound selected from the group consisting of AgInS, CuInS, CdSeS, CdSeTe, CdSTe, ZnSeS, ZnSeTe, ZnSTe, HgSeS, HgSeTe, HgSTe, CdZnS, CdZnSe, CdZnTe, CdHgS, CdHgSe, CdHgTe, HgZnS, HgZnSe, HgZnTe, MgZnSe, MgZnS, and a mixture thereof; and a quaternary compound selected from the group consisting of HgZnTeS, CdZnSeS, CdZnSeTe, CdZnSTe, CdHgSeS, CdHgSeTe, CdHgSTe, HgZnSeS, HgZnSeTe, HgZnSTe, and a mixture thereof.

The Group III-V compound may be selected from the group consisting of: a binary compound selected from the group consisting of GaN, GaP, GaAs, GaSb, AlN, AlP, AlAs, AlSb, InN, InP, InAs, InSb, and a mixture thereof; a ternary compound selected from the group consisting of GaNP, GaNAs, GaNSb, GaPAs, GaPSb, AlNP, AlNAs, AlNSb, AlPAs, AlPSb, InGaP, InNP, InNAs, InNSb, InPAs, InPSb, GaAlNP, and a mixture thereof; and a quaternary compound selected from the group consisting of GaAlNAs, GaAlNSb, GaAlPAs, GaAlPSb, GaInNP, GaInNAs, GaInNSb, GaInPAs, GaInPSb, InAlNP, InAlNAs, InAlNSb, InAlPAs, InAlPSb, and a mixture thereof.

The Group IV-VI compound may be selected from the group consisting of: a binary compound selected from the group consisting of SnS, SnSe, SnTe, PbS, PbSe, PbTe, and a mixture thereof; a ternary compound selected from the group consisting of SnSeS, SnSeTe, SnSTe, PbSeS, PbSeTe, PbSTe, SnPbS, SnPbSe, SnPbTe, and a mixture thereof; and a quaternary compound selected from the group consisting of SnPbSSe, SnPbSeTe, SnPbSTe, and a mixture thereof. The Group IV element may be selected from the group consisting of Si, Ge, and a mixture thereof. The IV group compound may be a binary compound selected from the group consisting of SiC, SiGe, and a mixture thereof.

The binary compound, the ternary compound, or the quaternary compound may be present in a particle with a uniform concentration distribution, or may be present in the same particle with a partially different concentration.

Each of the quantum dots QD1 and QD2 may have a core-shell structure including a core and a shell surrounding the core. In addition, each of the quantum dots QD1 and QD2 may have a core-shell structure in which one quantum dot surrounds another quantum dot. An interface between the core and the shell may have a concentration gradient in which the concentration of an element present in the shell becomes lower toward the center.

In exemplary embodiments of the inventive concept, a quantum dot may have a core-shell structure including a core having nanocrystals and a shell surrounding the core which are described above. The shell of the quantum dot may serve as a protection layer to prevent the chemical deformation of the core to maintain semiconductor properties, and/or a charging layer to impart electrophoresis properties to the quantum dot. The shell may be a single layer or multiple layers. An interface between the core and the shell may have a concentration gradient in which the concentration of an element present in the shell becomes lower toward the center. An example of the shell of the quantum dot may be a metal or non-metal oxide, a semiconductor compound, or a combination thereof.

For example, the metal or non-metal oxide may be a binary compound such as SiO₂, Al₂O₃, TiO₂, ZnO, MnO, Mn₂O₃, Mn₃O₄, CuO, FeO, Fe₂O₃, Fe₃O₄, CoO, Co₃O₄, and NiO, or a ternary compound such as MgAl₂O₄, CoFe₂O₄, NiFe₂O₄, and CoMn₂O₄. However, the inventive concept is not limited thereto.

In addition, the semiconductor compound may be, for example, CdS, CdSe, CdTe, ZnS, ZnSe, ZnTe, ZnSeS, ZnTeS, GaAs, GaP, GaSb, HgS, HgSe, HgTe, InAs, InP, InGaP, InSb, AlAs, AlP, AlSb, or the like. However, the inventive concept is not limited thereto.

Each of the quantum dots QD1 and QD2 may be a particle having a nanometer-scale size. Each of the quantum dots QD1 and QD2 may have a full width of half maximum (FWHM) of a light emission wavelength spectrum of about 45 nm or less, e.g., about 40 nm or less, or e.g., about 30 nm or less, and color purity or color reproducibility may be increased in the above range. In addition, light emitted through each of the quantum dots QD1 and QD2 is emitted in all directions, so that a wide viewing angle may be provided.

In addition, the form of each of the quantum dots QD1 and QD2 is not particularly limited, e.g., a nanoparticle, nanotube, nanowire, nanofiber, nano-plate particle, or the like in the shape of a sphere, pyramid, multi-arm, or cubic may be used as a quantum dot.

A quantum dot may control the color of emitted light according to the particle size thereof. Accordingly the quantum dot may have various light emission colors such as blue, red, green, and the like.

In an exemplary embodiment of the inventive concept, the color conversion layer CCM may include the plurality of quantum dots QD1 and QD2 which convert incident light into light having a different wavelength region. For example, the color conversion layer CCM may include a first quantum dot QD1 for converting incident light having a specific wavelength into light having a first wavelength and emitting the same, and a second quantum dot QD2 for converting incident light having a specific wavelength into light having a second wavelength and emitting the same.

In an exemplary embodiment of the inventive concept, the color conversion layer CCM may further include a scattering particle FP. The scattering particle FP may be TiO2 or a silica-based nanoparticle. The scattering particle FP may scatter light emitted from the quantum dots QD1 and QD2 to be emitted to the outside of the color conversion layer CCM.

For example, when the color conversion layer CCM includes the plurality of quantum dots QD1 and QD2 and light provided from the light source LD (see FIG. 2) is light of a blue light wavelength region, the first quantum dot QD1 may convert blue light into light of a green light wavelength, and the second quantum dot QD2 may convert blue light into light of a red light wavelength. For example, when light provided from the light source LD (see FIG. 2) is blue light having the maximum emission peak at 420 nm to 470 nm, the first quantum dot QD1 may emit green light having the maximum emission peak at 520 nm to 570 nm, and the second quantum dot QD2 may emit red light having the maximum emission peak at 620 nm to 670 nm. However, it should be understood that blue light, green light, and red light are not limited to the examples of wavelength regions presented above, but may include all the wavelength regions that may be recognized as blue light, green light, and red light.

In addition, according to the particle size of the quantum dots QD1 and QD2, the color of emitted light may vary. The particle size of the first quantum dot QD1 and the particle size of the second quantum dot QD2 may be different from each other. For example, the particle size of the first quantum dot QD1 may be smaller than the particle size of the second quantum dot QD2. In this case, the first quantum dot QD1 may emit light having a wavelength shorter than that of light which the second quantum dot QD2 emits.

Referring back to FIG. 2, the color conversion layer CCM may be disposed directly on the low refraction layer LRL. For example, the color conversion layer CCM may be formed by being coated on the low refraction layer LRL. The color conversion layer CCM may be provided on the low refraction layer LRL by various methods such as slit coating, spin coating, roll coating, spray coating, and ink jet printing. However, the inventive concept is not limited thereto. A barrier layer to be described later may be disposed between the color conversion layer CCM and the low refraction layer LRL.

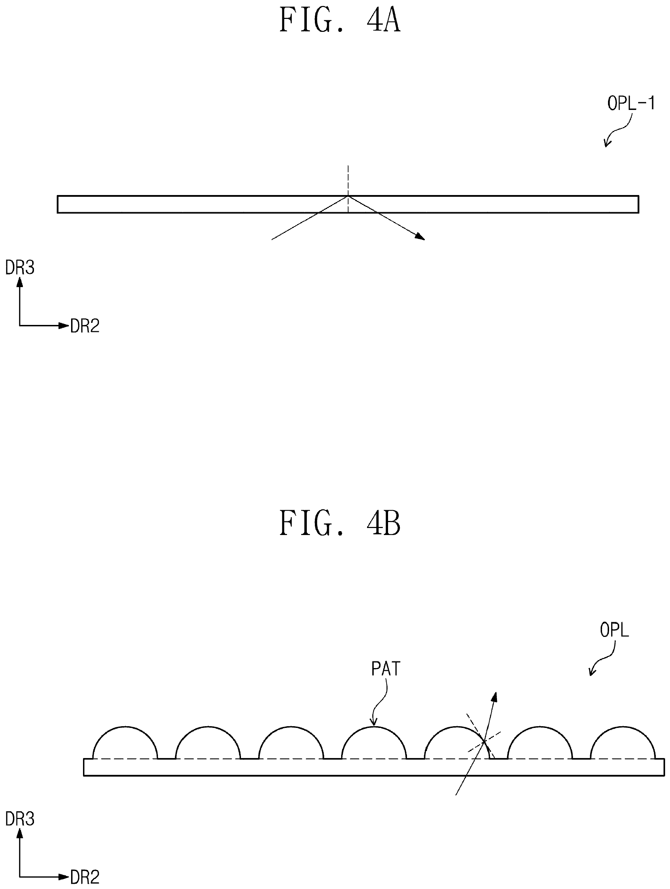

The optical layer OPL may be disposed on the color conversion layer CCM. The optical layer OPL may protect the color conversion layer CCM and concentrate emitted light, simultaneously. The optical layer OPL will be described in detail with reference to FIGS. 4A to 5B.

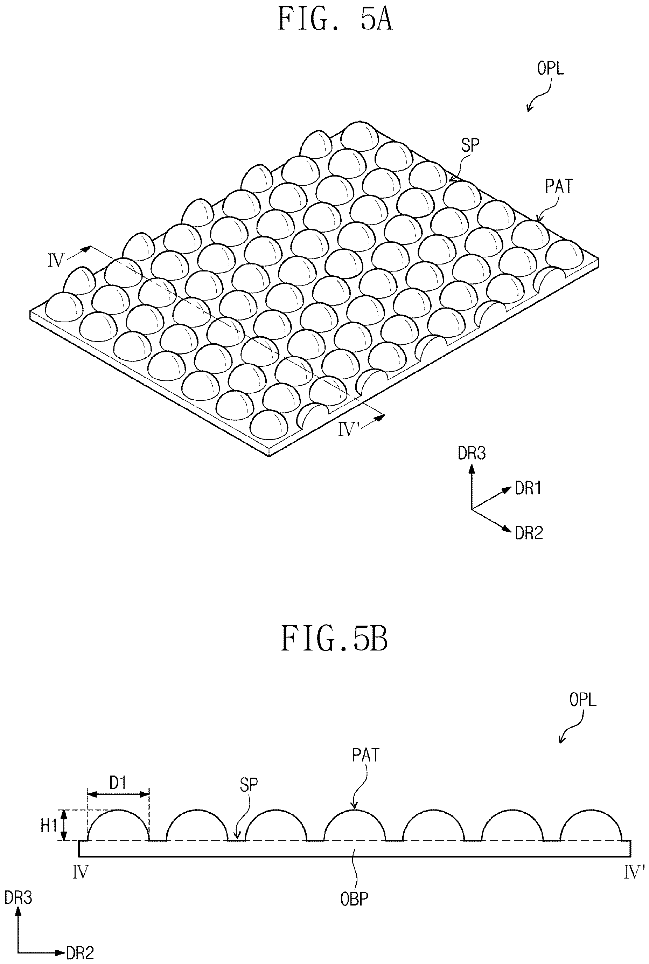

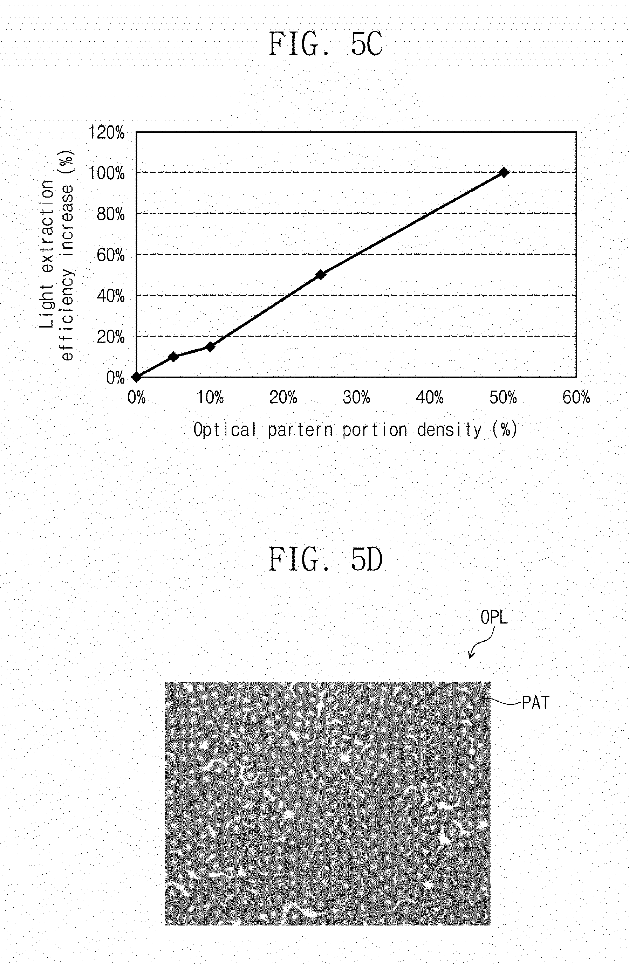

FIG. 4A is a view showing a path of light in an optical layer OPL-1 without an optical pattern portion PAT, and FIG. 4B is a view showing a path of light in the optical layer OPL according to an exemplary embodiment of the inventive concept. FIG. 5A is a perspective view showing the optical layer OPL according to an exemplary embodiment of the inventive concept, and FIG. 5B is a cross-sectional view of a portion corresponding to IV-IV' of FIG. 5A. FIG. 5C is a graph showing the measurement of an increase in light efficiency according to the density of an optical pattern portion according to an exemplary embodiment of the inventive concept. FIG. 5D is an image obtained by capturing a plane of the optical layer OPL viewed from above with an optical microscope.

In an exemplary embodiment of the inventive concept, the optical layer OPL may include a plurality of optical pattern portions PAT for concentrating light in the direction of the liquid crystal layer LCL. As shown in FIG. 4A, when light emitted from the light guiding member LGM has an incident angle near the critical angle, most of the light is not concentrated in the normal direction of a boundary surface of the optical layer OPL-1. Therefore, the light is not transmitted to the liquid crystal display panel DP (see FIG. 1), so that the optical layer OPL-1 not including the optical pattern portion PAT has low optical efficiency. On the other hand, as shown in FIG. 5B, light having an incident angle near the critical angle is concentrated by the optical pattern portion PAT. Therefore, the light is effectively transmitted to the liquid crystal display panel DP (see FIG. 1), so that the optical layer OPL including the optical pattern portion PAT may increase light efficiency.

Referring to FIG. 5A, FIG. 5B and FIG. 5D, the optical pattern portion PAT may have a convex lens shape protruding in the direction of the exit surface LGM-T (see FIG. 2). Additionally, the optical pattern portions PAT may be spaced apart from each other and arranged at regular intervals, or may be randomly arranged. Between the optical pattern portions PAT, a spacing plane SP may be formed, that is the optical pattern portions PAT may protrude from an at least substantially flat surface of the optical layer OPL, whereby the optical pattern portions PAT may be provided with a distance to each other.

When the total area occupied by the plurality of optical pattern portions PAT in the total area of the optical layer OPL is referred to as the density (%) of the optical pattern portion PAT, in an exemplary embodiment of the inventive concept, the density of the optical pattern portion PAT may be 50% or greater. Referring to FIG. 5C, as the density of the optical pattern portion PAT increases, light extraction efficiency may be increased. When the value is 50% or greater, the light efficiency may be increased by 100%.

In an exemplary embodiment of the inventive concept, the optical layer OPL may further include a base layer OBP, and the optical pattern portion PAT may be provided on the base layer OBP. For example, the optical pattern portion PAT may be directly disposed on the base layer OBP, or the optical pattern portion PAT and the base layer OBP may be integrally formed. The optical pattern portion PAT has a height H1 and a diameter D1 each in a predetermined range, and accordingly, the optical pattern portion PAT has an aspect ratio (H1/D1) of 0.5 to 1.5. When the aspect ratio is less than 0.5 or greater than 1.5, the optimum light concentration range is not obtained, so that optical efficiency may be reduced. Additionally, the height H1 refers to the vertical distance from the base layer OBP to the highest point of the optical pattern portion PAT, and the diameter D1 refers to the longest distance through the center of the optical pattern portion PAT.

In an exemplary embodiment of the inventive concept, the average diameter of the optical pattern portion PAT may be 100 nm to 20 µm. When the average diameter of the optical pattern portion PAT is less than 100 nm, the optical pattern portion PAT may not be properly prepared. When the average diameter of the optical pattern portion PAT is greater than 20 µm, the optimum light concentration range is not obtained, so that optical efficiency may be reduced.

A cross-section parallel to the light guiding member LGM of the optical pattern portion PAT may be in a circular or an elliptical shape. In addition, a cross-section perpendicular to the light guiding member LGM of the optical pattern portion PAT may be in a semi-circular or a semi-elliptical shape. However, the inventive concept is not limited thereto. When the above aspect ratio range is satisfied, the optical pattern portion PAT may have various shapes.

In an exemplary embodiment of the inventive concept, the optical layer OPL has a pencil hardness of 4 H or greater. The color conversion layer CCM is susceptible to scratches during processing, in which case, quantum dots of the color conversion layer CCM can be deteriorated due to the penetration of external oxygen and/or moisture, causing the generation of black spots or white spots in a liquid crystal display device. The optical layer OPL according to an exemplary embodiment of the inventive concept has a pencil hardness of 4 H or greater, and thus, may protect the color conversion layer CCM and prevent the generation of scratches and the like in the color conversion layer CCM during processing. It is to be understood that the aforementioned pencil hardness was measured by setting the moving speed of a pencil at 1 mm/sec when the contact angle of the pencil was 45 degrees with a load of 1 kg.

A material forming the optical layer OPL may not be limited as long as it satisfies the above pencil harness and has high transmittance. For example, a thermosetting resin or a photo-curable resin may form the optical layer OPL. The thermosetting resin or the photo-curable resin having a pencil hardness of 4 H or greater may be a polyfunctional acrylate resin, a polyfunctional epoxy resin, or a silsesquioxane derivative.

The polyfunctional acrylate resin may be, for example, bifunctional (meth)acrylate, three or more functional (meth)acrylate, polyfunctional urethane(meth)acrylate, polyfunctional epoxy(meth)acrylate, polyfunctional polyester(meth)acrylate, polyfunctional polyether(meth)acrylate, or the like, wherein the bifunctional (meth)acrylate may be: an aliphatic compound such as ethylene glycol di(meth)acrylate, diethylene glycol di(meth)acrylate, tetraethylene glycol di(meth)acrylate, polyethylene glycol di(meth)acrylate, propylene glycol di(meth)acrylate, dipropylene glycol di(meth)acrylate, tripropylene glycol di(meth)acrylate, polypropylene glycol di(meth)acrylate, butylene glycol di(meth)acrylate, neopentyl glycol di(meth)acrylate, 1,6-hexanediol di(meth)acrylate, nonane diol di(meth)acrylate, glycerin di(meth)acrylate, pentaerythritol di(meth)acrylate, ethylene glycol diglycidyl ether di(meth)acrylate, diethylene glycol diglycidyl ether di(meth)acrylate, hydroxypivalic acid-modified neopentyl glycol di(meth)acrylate, isocyanuric acid ethylene oxide-modified di(meth)acrylate, and 2-(meth)acryloyloxyethyl acid phosphate diester; an alicyclic compound such as bis(hydroxymethyl)tricyclo[5.2.1.02,6]decane=di(meth)acrylate, bis(hydroxymethyl)tricyclo[5.2.1.02,6]decane=di(meth)acrylate, bis(hydroxy)pentacyclo[6.5.1.13,6.02,7.09,13]pentadecane=di(meth)acrylate, bis(hydroxymethyl)pentacyclo[6.5.1.13,6.02,7.09,13]pentadecane=di(meth)acrylate, 2,2-bis[4-(β-(meth)acryloyloxyethoxy)cyclohexyl]propane, 1,3-bis((meth) acryloyloxymethyl)cyclohexane, 1,3-bis((meth)acryloyloxyethyloxymethyl)cyclohexane, 1,4-bis((meth)acryloyloxymethyl)cyclohexane, and 1,4-bis((meth)acryloyloxyethyloxymethyl)cyclohexane; and an aromatic compound such as phthalic acid diglycidyl ester di(meth)acrylate, ethylene oxide-modified bisphenol A (2,2'-diphenylpropane) type di(meth)acrylate, and propylene oxide-modified bisphenol A (2,2'-diphenylpropane) type di(meth)acrylate, and the three or more functional (meth)acrylate may be: an aliphatic compound such as trimethylolpropane tri(meth)acrylate, pentaerythritol tri(meth)acrylate, pentaerythritol tetra(meth)acrylate, dipentaerythritol penta(meth)acrylate, dipentaerythritol hexa(meth)acrylate, ditrimethylolpropane tetra(meth)acrylate, tri(meth)acryloyloxyethoxy trimethylol propane, glycerin polyglycidyl ether poly(meth)acrylate, isocyanuric acid ethylene oxide-modified tri(meth)acrylate, ethylene oxide-modified dipentaerythritol penta(meth)acrylate, ethylene oxide-modified dipentaerythritol hexa(meth)acrylate, ethylene oxide-modified pentaerythritol tri(meth)acrylate, and ethylene oxide-modified pentaerythritol tetra(meth)acrylate; and an alicyclic compound such as 1,3,5-tris((meth)acryloyloxymethyl)cyclohexane, and 1,3,5-tris((meth) acryloyloxyethyloxymethyl)cyclohexane. Any single one thereof or a combination of two or more thereof may be used.

The polyfunctional epoxy resin may be, for example, bisphenol F diglycidyl ether-type epoxy resin, bisphenol A diglycidyl ether type epoxy resin, polyolefin-added bisphenol A diglycidyl ether type epoxy resin, polyolefin-added bisphenol F diglycidyl ether type epoxy resin, 1,6-hexanediol diglycidyl ether type epoxy resin, 1,4-butanediol diglycidyl ether type epoxy resin, cycloaliphatic diglycidyl ether type epoxy resins, and the like. Any single one thereof or a combination of two or more thereof may be used.

In an exemplary embodiment of the inventive concept, the optical layer OPL may further include a silica particle. When the silica particle is included, the formation of the optical pattern portion PAT may be easier. The size of the silica particle may be 50 nm to 200 nm, but is not limited thereto.

The optical layer OPL was formed to have a pencil hardness of less than 4 H and to have a pencil hardness of equal to or greater than 4 H, respectively, to measure anti-wear properties and transmittance. The results are as shown in Table 1. The anti-wear properties were evaluated according to whether there is a scratch after reciprocating the steel wool #0000 (grade #0000) 10 times under a load of 1.5 kg.

**[Table 1]**

| Materials | Pencil hardness | Anti-wear properties | Transmittance |
|---|---|---|---|
| Polyimide resin | 1 H: | Scratch bundle | 91% |
| Polyfunctional acrylate resin | 4 H: | No scratches | 92% |
| Polyfunctional epoxy resin | 6 H: | No scratches | 92% |

The pencil hardness of the polyimide resin, which is typically used as an optical layer, was measured to be less than 4 H. Based on the result of the anti-wear properties evaluation, it was confirmed that there were a plurality of scratches. For example, when the pencil hardness was 1H there were scratches. However, when the pencil hardness was 4 H or greater, it was confirmed that there were no scratches based on the result of the anti-wear properties evaluation. For example, when the pencil hardness was 4H or 6H there were no scratches. Accordingly, the color conversion layer CCM is expected to be effectively protected.

Since the optical layer OPL according to an exemplary embodiment of the inventive concept may serve as a protection layer while increasing light efficiency by increasing the light concentration effect, an additional optical sheet is not required. Therefore, a thin liquid crystal display device may be achieved.

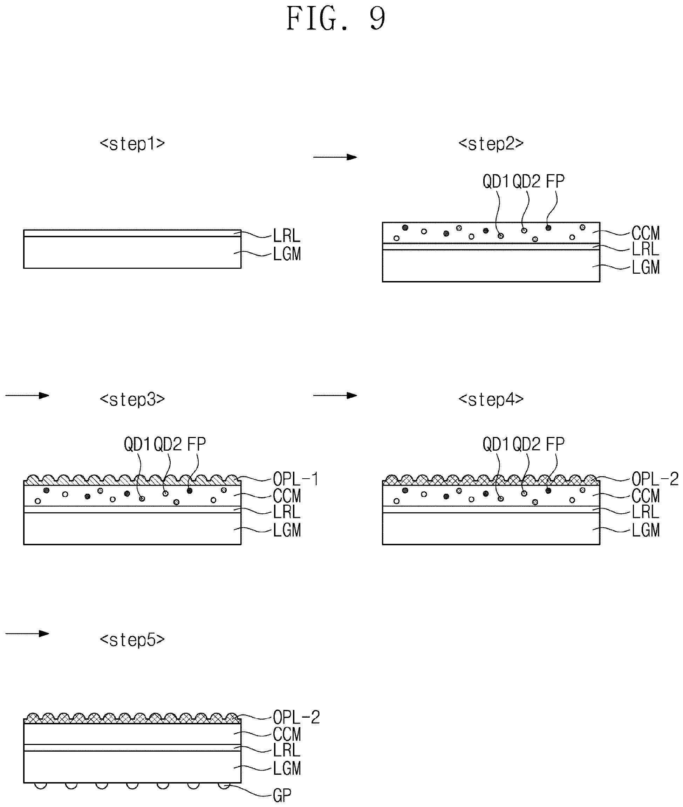

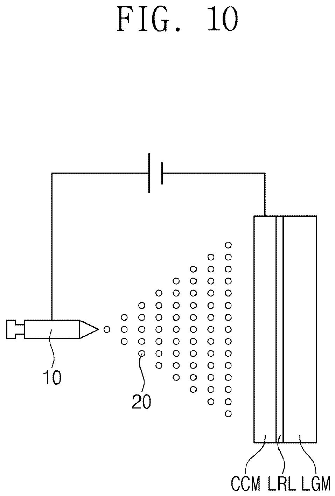

The optical layer OPL may be disposed directly on the color conversion layer CCM. However, the inventive concept is not limited thereto. A barrier layer may be disposed between the optical layer OPL and the color conversion layer CCM. The optical layer OPL may be disposed in the outermost region of the backlight unit BLU to serve as a protection layer. The optical layer OPL may be formed on the color conversion layer CCM by an electro spray method. The preparation method of the optical layer OPL will be described in detail with reference to FIG. 9 and FIG. 10.

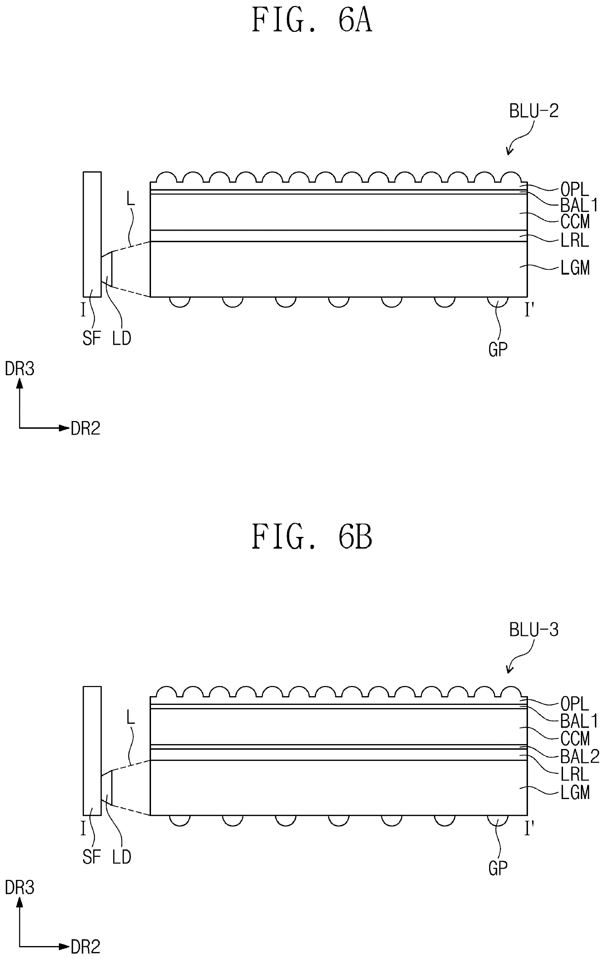

FIG. 6A and FIG. 6B are cross-sectional views showing a backlight unit according to an exemplary embodiment of the inventive concept. Backlight units BLU-2 and BLU-3 of the embodiments shown in FIG. 6A and FIG. 6B differ from the backlight unit BLU-1 of the embodiment shown in FIG. 2 in the composition of barrier layers BAL1 and BAL2. Hereinafter, detailed descriptions of the same compositions as those described with reference to FIG. 1 to FIG. 5D will be omitted.

The backlight units BLU-2 and BLU-3 may further include at least one of the barrier layers BAL1 or BAL2. At least one of the barrier layers BAL1 or BAL2 may be disposed adjacent to one surface of the color conversion layer CCM.

The barrier layers BAL1 and BAL2 prevent the penetration of moisture and/or oxygen. The barrier layers BAL1 and BAL2 may include at least one inorganic layer. In other words, the barrier layers BAL1 and BAL2 may be formed by including an inorganic material. For example, the barrier layers BAL1 and BAL2 may be formed by including silicon nitride, aluminum nitride, zirconium nitride, titanium nitride, hafnium nitride, tantalum nitride, silicon oxide, aluminum oxide, titanium oxide, tin oxide, cerium oxide and silicon oxynitride, or a metal thin film having light transmittance, and the like. Additionally, the barrier layers BAL1 and BAL2 may further include an organic film. The barrier layers BAL1 and BAL2 may be formed of a single layer or a plurality of layers. The thickness of the barrier layers BAL1 and BAL2 is not particularly limited, and may be, for example, 0.4 µm to 1.0 µm.

In FIG. 6A, the backlight unit BLU-2 may include a first barrier layer BAL1 disposed between the color conversion layer CCM and the optical layer OPL. The first barrier layer BAL1 may be disposed directly on the color conversion layer CCM, or may be in contact with the optical layer OPL. The first barrier layer BAL1 is illustrated as being a single layer. However, the inventive concept is not limited thereto. The first barrier layer BAL1 may include a plurality of layers. When the first barrier layer BAL1 includes a plurality of layers, the first barrier layer BAL1 may include a plurality of inorganic films, or may include both an inorganic film and an organic film.

In FIG. 6B, the backlight unit BLU-3 may include the first barrier layer BAL1 disposed between the color conversion layer CCM and the optical layer OPL, and a second barrier layer BAL2 disposed between the low refraction layer LRL and the color conversion layer CCM. The second barrier layer BAL2 may be disposed directly on the low refraction layer LRL, or may be in contact with the color conversion layer CCM. The second barrier layer BAL2 is illustrated as being a single layer. However, the inventive concept is not limited thereto. The second barrier layer BAL2 may include a plurality of layers. When the second barrier layer BAL2 includes a plurality of layers, the second barrier layer BAL2 may include a plurality of inorganic films, or may include both an inorganic film and an organic film.

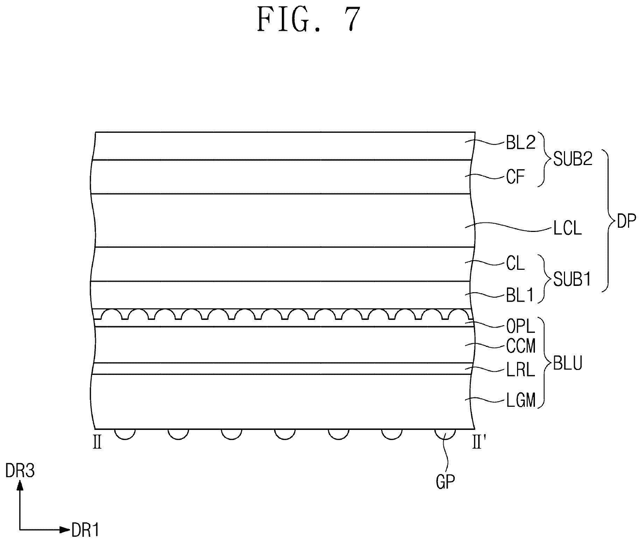

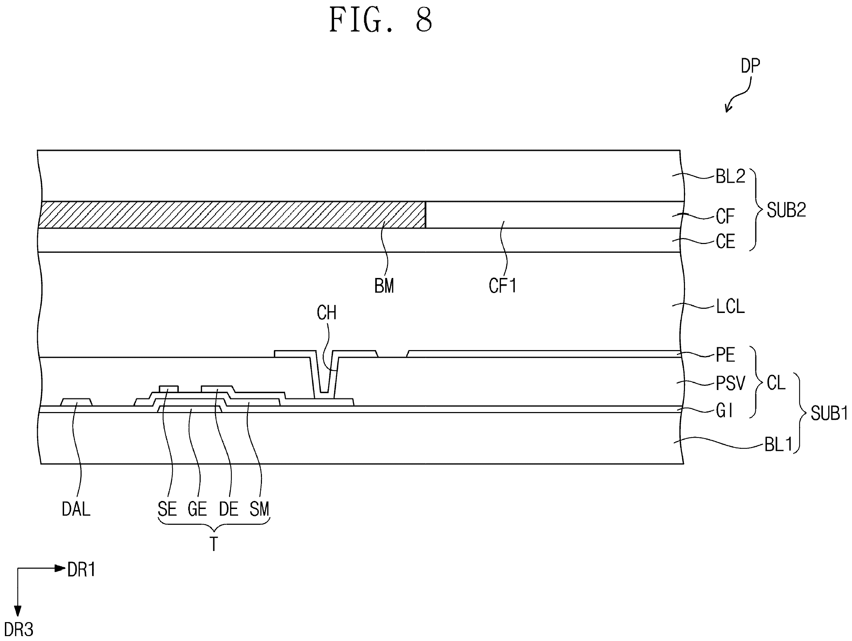

FIG. 7 is a cross-sectional view of a portion corresponding to II-II' in the liquid crystal display device shown in FIG. 1. FIG. 8 is a cross-sectional view of a liquid crystal display panel according to an exemplary embodiment of the inventive concept.

In an exemplary embodiment of the inventive concept shown in FIG. 7, the liquid crystal display panel DP may be disposed on the backlight unit BLU.

The backlight unit BLU includes the light guiding member LGM, the low refraction layer LRL disposed on the light guiding member LGM, the color conversion layer CCM disposed on the low refraction layer LRL, and the optical layer OPL disposed on the color conversion layer CCM.

The liquid crystal display panel DP may include a first substrate SUB1 including a first base substrate BL1 and a circuit layer CL, a second substrate SUB2 including a second base substrate BL2 and a color filter layer CF, and a liquid crystal layer LCL disposed between the first substrate SUB1 and the second substrate SUB2.

In addition, the liquid crystal display panel DP may further include a polarizing layer. The polarizing layer may be disposed on a lower portion of the first substrate SUB1, an upper portion of the second substrate SUB2, inside the first substrate SUB1 and/or inside (e.g., an in cell polarizer) the second substrate SUB2. The polarizing layer may be a coated-type polarizing layer, or may be formed by deposition. Alternatively, the polarizing layer may be a polarizing member of a film-type.

In an exemplary embodiment of the inventive concept shown in FIG. 8, the liquid crystal display panel DP includes the first substrate SUB1 and the second substrate SUB2 spaced apart from each other, and the liquid crystal layer LCL disposed between the first substrate SUB1 and the second substrate SUB2. However, the structure of the liquid crystal display panel DP is not limited thereto. For example, the first base substrate BL1 and the second base substrate BL2 may be reversed.

The first substrate SUB1 may include the first base substrate BL1 and the circuit layer CL disposed closer to the liquid crystal layer LCL than the first base substrate BL1.

The first base substrate BL1 may be a polymer substrate, a plastic substrate, a glass substrate, or a quartz substrate. The first base substrate BL1 may be a transparent insulation substrate. The first base substrate BL1 may be rigid or flexible. The first base substrate BL1 may serve as a base material on which the circuit layer CL and the like are disposed.

The circuit layer CL may include a gate line, a storage line, and an electrode forming an electric field in the liquid crystal layer LCL. A transistor T includes a gate electrode GE, an activation unit overlapping the gate electrode GE, a source electrode SE connected to a data line DAL, and a drain electrode DE spaced apart from the source electrode SE. A semiconductor pattern SM is provided on the gate electrode GE having a gate insulation film GI interposed therebetween. Some regions of the semiconductor pattern SM overlap the gate electrode GE. The semiconductor pattern SM includes an active pattern provided on the gate insulation film GI and an ohmic contact layer formed on the active pattern. The ohmic contact layer forms an ohmic contact between the active pattern, the source electrode SE, and the drain electrode DE, respectively.

The source electrode SE is branched from the data lines DAL. The source electrode SE is formed on the ohmic contact layer and some regions of the source electrode SE overlap the gate electrode GE. The data line DAL may be disposed in a region of the gate insulation film GI on which the semiconductor pattern SM is not disposed.

The drain electrode DE is spaced apart from the source electrode SE having the semiconductor pattern SM interposed therebetween. The drain electrode DE is formed on the ohmic contact layer and a region of the drain electrode DE overlaps the gate electrode GE.

Accordingly, an upper surface of the active pattern between the source electrode SE and the drain electrode DE is exposed, and becomes a channel portion defining a conduction channel between the source electrode SE and the drain electrode DE depending on whether a voltage is applied to the gate electrode GE. The source electrode SE and the drain electrode DE overlap a portion of the semiconductor pattern SM in a region except for the channel portion between the source electrode SE and the drain electrode DE.

A pixel electrode PE is connected to the drain electrode DE having a protection film PSV interposed therebetween. The protection film PSV covers the source electrode SE, the drain electrode DE, the channel portion, and the gate insulation film GI, and has a contact hole CH which exposes a portion of the drain electrode DE. The protection film PSV may include, for example, silicon nitride or silicon oxide. The pixel electrode PE is connected to the drain electrode DE through the contact hole CH formed on the protection film PSV. The pixel electrode PE is formed of a transparent conductive material. The pixel electrode PE, the protection film PSV and the gate insulation film GI may be included in the circuit layer CL.

The liquid crystal layer LCL is disposed between the first substrate SUB1 and the second substrate SUB2, and includes a plurality of liquid crystal molecules. The liquid crystal layer LCL may be provided such that liquid crystal molecules having a dielectric anisotropy are arranged. In the liquid crystal layer LCL, any liquid crystal molecule may be used without particular limitation. For example, an alkenyl-based liquid crystal compound or an alkoxy-based liquid crystal compound may be used as the liquid crystal molecule. The liquid crystal molecule used in the present embodiment may have a negative dielectric anisotropy, but the inventive concept is not limited thereto. For example, a liquid crystal molecule having a positive dielectric anisotropy may be used.

In addition, one or more insulation layers may be disposed on one surface of the first base substrate BL1. In addition, an alignment film may be further disposed between the first base substrate BL1 and the liquid crystal layer LCL. The alignment film may control the alignment angle of a liquid crystal injected into the liquid crystal layer LCL.

The second substrate SUB2 may include the second base substrate BL2 and the color filter layer CF and a common electrode CE disposed on a lower surface of the second base substrate BL2.

The second base substrate BL2 may be a polymer substrate, a plastic substrate, a glass substrate, or a quartz substrate. The second base substrate BL2 may be a transparent insulation substrate. The second base substrate BL2 may be rigid or flexible. The second base substrate BL2 may serve as a base material on which the color filter layer CF and the like are disposed.

On a lower surface of the second base substrate BL2, the color filter layer CF may be disposed. The color filter layer CF may include a filter CF1 for transmitting light of a predetermined wavelength region. A plurality of color filter layers CF may include a plurality of filters, in which, each filter may transmit light of different wavelength regions. For example, the color filter layer CF may include a red filter, a green filter, and a blue filter. However, the inventive concept is not limited thereto.

In addition, the color filter layer CF may further include a light blocking unit BM for preventing a light leakage phenomenon by blocking light. The light blocking unit BM may be a black matrix. The light blocking unit BM may be formed by including an organic light blocking material or an inorganic light blocking material which include a black pigment or a black dye. When the color filter layer CF includes the plurality of filters, the light blocking unit BM may be positioned between neighboring filters. The light blocking unit BM may overlap the boundaries of the neighboring filters.

On a lower side of the color filter layer CF, the common electrode CE may be disposed. The common electrode CE is illustrated as being disposed directly on a lower surface of the color filter layer CF, but is not limited thereto. An insulation layer may be further disposed between the common electrode CE and the color filter layer CF. The common electrode CE controls the liquid crystal layer LCL by forming an electric field with the pixel electrode PE. In an exemplary embodiment of the inventive concept, the common electrode CE is illustrated as being disposed on the second base substrate BL2, but the inventive concept is not limited thereto. The common electrode CE may be disposed on the first base substrate BL1.

In the present embodiment, a liquid crystal display panel in a vertical alignment mode is described. However, a liquid crystal display panel in an in-plane switching mode, a fringe-field switching (FFS) mode, a Plane to Line Switching (PLS) mode, a Super Vertical Alignment (SVA) mode, or a Surface-Stabilized Vertical Alignment (SS-VA) mode may be applied to an exemplary embodiment of the inventive concept.

It is to be understood that the embodiments of a liquid crystal display panel described with reference to FIG. 1, FIG. 7 and FIG. 8 are exemplary. The configuration of each of the first substrate SUB1 and the second substrate SUB2 may be modified in various ways.

The backlight unit according to an exemplary embodiment of the inventive concept described above and the liquid crystal display device including the same include an optical layer that has a light guiding member, a color conversion layer, and an optical pattern portion, and that has a predetermined strength, to thereby improve light efficiency by enhancing a light concentration effect, so that excellent color reproducibility may be exhibited and luminance may be improved. In addition, since the color conversion layer is effectively protected, reliability may be increased since the color conversion layer may not be exposed to an external environment. In addition, a thin liquid crystal display device may be achieved. Furthermore, since the color conversion layer including a quantum dot is applied to the backlight unit, display quality may be improved.

Hereinafter, with reference to the accompanying drawings, a method for manufacturing a backlight unit according to an exemplary embodiment of the inventive concept will be described.

FIG. 9 is a view schematically showing a step for manufacturing a backlight unit described above according to an exemplary embodiment of the inventive concept. FIG. 10 is a view schematically showing a method for preparing an optical layer according to an exemplary embodiment of the inventive concept, the method corresponding to Step 3 of FIG. 9. Hereinafter, detailed descriptions of the same compositions as those described with reference to FIG. 1 to FIG. 8 will be omitted.

Step 1 to Step 5 in FIG. 9 sequentially show the manufacturing steps of a backlight unit. However, the inventive concept is not limited thereto. For example, Step 5 for forming the light guiding pattern portion GP may be performed before Step 1 or after Step 1, e.g., immediately after Step 1.

Referring to Step 1, the low refraction layer LRL is formed on the light guiding member LGM. The low refraction layer LRL may be formed to a thickness of 0.1 µm to 10 µm. The low refraction layer LRL may be formed by being coated on the exit surface LGM-T (see FIG. 2) of the light guiding member LGM. For example, the low refraction layer LRL may be formed by slit coating, spin coating, roll coating, spray coating, ink jet printing, or the like. However, the inventive concept is not limited thereto. For example, the low refraction layer LRL may be formed on the light guiding member LGM by various methods such as a transfer method.

Next, Step 2 is a step for forming the color conversion layer CCM. The color conversion layer CCM is formed on the low refraction layer LRL. The color conversion layer CCM may be a color conversion layer including a quantum dot. The color conversion layer CCM may include at least one of the quantum dots QD1 and QD2, and the quantum dots QD1 and QD2 may be dispersed in a base resin. The color conversion layer CCM may further include the scattering particle FP. For example, the color conversion layer CCM may include a plurality of the scattering particles FP.

The color conversion layer CCM may be formed directly on the low refraction layer LRL. The color conversion layer CCM may be formed to a thickness of 0.5 µm to 100 µm. The color conversion layer CCM may be formed on the low refraction layer LRL through a coating process. For example, the color conversion layer CCM may be formed by slit coating, spin coating, roll coating, spray coating, ink jet printing, or the like. However, the inventive concept is not limited thereto.

In the manufacturing steps of a backlight unit, a step for forming a barrier layer in contact with one surface of the color conversion layer CCM may further be included. The barrier layer may be formed to protect the color conversion layer CCM from the outside. The barrier layer may be disposed between the color conversion layer CCM and the low refraction layer LRL and/or between the color conversion layer CCM and the optical layer OPL. When the barrier layer is disposed between the color conversion layer CCM and the low refraction layer LRL, the barrier layer may be a base surface on which the color conversion layer CCM is formed. The barrier layer may include an inorganic film or an organic film. The barrier layer may be provided as a single layer or multiple layers. The step for forming the barrier layer may be performed between Step 1 and Step 2 and/or between Step 2 and Step 3. In other words, the barrier layer may be formed before the color conversion layer CCM or after the color conversion layer CCM.

Step 3 and Step 4 are steps for providing the optical layers OPL-1 and OPL-2.

Step 3 is a step for depositing the optical layer OPL-1 on the color conversion layer CCM by an electro spray method. The electro spray method will be described with reference to FIG. 10. The electro spray apparatus of the embodiment shown in FIG. 10 includes an electric spray nozzle 10 for spraying an electric spray material, a voltage supplying device for applying a voltage, and a laminated body in which the electric spray material sprayed through the electric spray nozzle 10 is deposited. The laminated body may be a structure in which the light guiding member LGM, the low refraction layer LRL, and the color conversion layer CCM are sequentially laminated.

The step for depositing the optical layer OPL-1 on the color conversion layer CCM is performed by first preparing an electric spray material, then filling the electric spray nozzle 10 with the prepared electric spray material, followed by spraying the electric spray material on the color conversion layer CCM. The electric spray material sprayed through the electric spray nozzle 10 is deposited on the laminated body in a droplet form 20, so that the optical layer OPL-1 including an optical pattern portion may be formed without a separate patterning process.

In an exemplary embodiment of the inventive concept, the electric spray material may include a thermosetting resin or a photo-curable resin, and accordingly, an optical layer OPL-2 may be formed through a subsequent curing process. The electric spray material may further include a silica particle.

The viscosity of the electric spray material may be 20 cP (0,02 Pa s) or less. When the viscosity of the electric spray material is greater than 20 cP (0,02 Pa s), the electric spray material may not be properly sprayed in a droplet form. Therefore, the spraying material may not be properly applied using the electro spray method.

Step 4 is a step for forming the optical layer OPL-2 having a pencil hardness of 4 H or greater by curing the deposited optical layer OPL-1. The optical layer OPL-2 may be formed through a thermal curing or photo-curing process. For example, the optical layer OPL-1 may be subjected to thermal curing for 10 minutes to 30 minutes at a temperature of 100°C to 180°C, or may be subjected to curing by being irradiated with an exposure energy of about 2 J/cm^2 to form the optical layer OPL-2.

Step 5 is a step for forming the light guiding pattern portion GP. The light guiding pattern portion GP may be formed by being patterned directly on a lower surface of the light guiding member LGM, or may be provided to the light guiding member LGM through a transfer process.

Unlike a conventional method in which a separate imprinting process is performed to form a pattern layer, the method for manufacturing a backlight unit according to an exemplary embodiment of the inventive concept described above uses an electro spray method. Therefore, the formation of an optical pattern layer may be achieved simultaneously with the deposition of materials. Therefore, the process is simplified and productivity may be increased.

An exemplary embodiment of the inventive concept may provide a backlight unit exhibiting high luminance by increasing light efficiency. The backlight unit may have increased reliability by protecting a color conversion layer from external environment. A manufacturing method of the backlight unit is also provided.

An exemplary embodiment of the inventive concept may provide a liquid crystal display device having excellent color reproducibility and display quality.

An exemplary embodiment of the inventive concept may provide a backlight unit having a thin shape by including an optical layer capable of serving as a protection sheet and as a light concentration sheet, simultaneously.

While the inventive concept has been shown and described with reference to exemplary embodiments thereof, it will be understood by those skilled in the art that various changes in form and details may be made thereto without departing from the scope of the inventive concept as defined in the following claims.

## Claims

1. A backlight unit (BLU), comprising:
a light guiding member (LGM) including an incident surface (LGM-F) on which light (L) is incident and an exit surface (LGM-T) from which the light (L) is emitted;
a light source (LD) adjacent to the incident surface (LGM-F) of the light guiding member (LGM) and configured to generate the light (L);
a low refraction layer (LRL) disposed on the exit surface (LGM-T) of the light guiding member (LGM);
a color conversion layer (CCM) disposed on the low refraction layer (LRL); and
an optical layer (OPL) disposed on the color conversion layer (CCM), wherein the optical layer (OPL) has a pencil hardness of 4 H or greater.

2. The backlight unit (BLU) of claim 1, wherein the optical layer (OPL) includes a plurality of optical pattern portions (PAT), at least one of the plurality of optical pattern portions (PAT) has a convex lens shape protruding in a direction away from the exit surface (LGM-T) of the light guiding member (LGM), and has an aspect ratio of 0.5 to 1.5.

3. The backlight unit (BLU) of claim 1 or 2, wherein the optical layer (OPL) includes a plurality of optical pattern portions (PAT), and an average diameter of the plurality of optical pattern portions (PAT) is 100 nm to 20 µm.

4. The backlight unit (BLU) of at least one of claims 1 to 3, wherein the optical layer (OPL) includes a plurality of optical pattern portions (PAT), the plurality of optical pattern portions (PAT) are spaced apart from each other, and the optical layer (OPL) includes a spacing plane (SP) between the optical pattern portions (PAT).

5. The backlight unit (BLU) of at least one of claims 1 to 4, wherein the optical layer (OPL) comprises a polyfunctional polymerizable resin.

6. The backlight unit (BLU) of at least one of claims 1 to 5, wherein the optical layer (OPL) comprises a silica particle.

7. The backlight unit (BLU) of at least one of claims 1 to 6, wherein the optical layer (OPL) is disposed in an outermost region of the backlight unit (BLU).

8. The backlight unit (BLU) of at least one of claims 1 to 7, wherein the color conversion layer (CCM) comprises a quantum dot (QD1, QD2).

9. A liquid crystal display device (DD), comprising:
a liquid crystal display panel (DP) configured to be provided with light (L) to display an image; and
a backlight unit (BLU) configured to provide the light (L), wherein the backlight unit (BLU) includes:
a light source (LD) configured to generate the light (L);
a light guiding member (LGM) configured to guide the light (L) generated from the light source (LD);
a color conversion layer (CCM) disposed on the light guiding member (LGM) and including a quantum dot (QD1, QD2); and
an optical layer (OPL) disposed on the color conversion layer (CCM) and including a plurality of optical pattern portions (PAT) spaced apart from each other.

10. The liquid crystal display device (DD) of claim 9, wherein the optical layer (OPL) further comprises a spacing plane (SP) between the plurality of optical pattern portions (PAT), and has a pencil hardness of 4 H or greater.

11. The liquid crystal display device (DD) of claim 9 or 10, wherein at least one of the plurality of optical pattern portions (PAT) has a convex lens shape protruding in a direction towards the liquid crystal display panel (DP), and has an aspect ratio of 0.5 to 1.5.

12. A method for manufacturing a backlight unit (BLU), the method comprising:
forming a low refraction layer (LRL) on a light guiding member (LGM);
forming a color conversion layer (CCM) on the low refraction layer (LRL); and
forming an optical layer (OPL) on the color conversion layer (CCM), wherein the forming of the optical layer (OPL) includes:
preparing an electric spray material including a polyfunctional polymerizable resin;
spraying the electric spray material through a nozzle (10) while a voltage is applied;
laminating the electric spray material on the color conversion layer (CCM); and
curing the laminated electric spray material.

13. The method of claim 12, wherein the electric spray material further comprises a silica particle, and has a viscosity of 20 cP or less.

14. The method of claim 12 or 13, wherein the electric spray material is sprayed in a droplet state.

15. The method of at least one of claims 12 to 14, wherein the forming of the color conversion layer (CCM) includes:
preparing a base resin (BR) in which quantum dots (QD1, QD2) are dispersed; and
coating the base resin (BR) on the low refraction layer (LRL).
